# EUROPÄISCHE PATENTSCHRIFT

(11) **EP 2 914 083 B1**
(45) Veröffentlichungstag und Bekanntmachung des Hinweises auf die Patenterteilung: **17.05.2017**
(21) Anmeldenummer: 13786247.0
(22) Anmeldetag: 05.11.2013
(51) Int. Cl.: A01B 45/02

(54) **BODENBEARBEITUNGSVORRICHTUNG ZUM ERZEUGEN VON HOHLRÄUMEN IN EINEM BODEN**
SOIL PROCESSING DEVICE FOR CREATING CAVITIES IN SOIL
DISPOSITIF DE TRAVAIL DU SOL POUR RÉALISER DES CAVITÉS DANS UN SOL

(30) Priorität: 05.11.2012 DE 202012010495 U
(43) Veröffentlichungstag der Anmeldung: 09.09.2015
(73) Patentinhaber: Redexim Handel- en Exploitatie Maatschappij B.V., 3702 AC Zeist (NL)
(72) Erfinder: De Bree, Cornelius Hermanus Maria, 3971 Driebergen (NL)
(74) Vertreter: dompatent von Kreisler Selting Werner - Partnerschaft von Patent- und Rechtsanwälten mbB
(86) Internationale Anmeldenummer: PCT/EP2013/072989
(87) Internationale Veröffentlichungsnummer: WO 2014/068127

(56) Entgegenhaltungen:
- EP-A1- 0 853 869
- EP-A1- 1 210 853
- DE-A1-102005 021 025

## Beschreibung

Die Erfindung betrifft eine Bodenbearbeitungsvorrichtung zum Erzeugen von Hohlräumen in einem Boden nach dem Oberbegriff des Anspruchs 1.

Bisher bekannte Bodenbearbeitungsvorrichtungen zum Erzeugen von Hohlräumen im Boden weisen einen in Fahrtrichtung bewegbaren Maschinenrahmen und mindestens einem in dem Maschinenrahmen gelagerten Antrieb auf, der mindestens ein schwenkbar gelagertes Stechwerkzeug im Wesentlichen vertikal auf- und abbewegt. Das Stechwerkzeug befindet sich vor dem Einstechen in dem Boden in einer Ausgangslage unter einem vorgegebenen Einstechwinkel und das Stechwerkzeug führt im Boden aufgrund der Bewegungen des Maschinenrahmens in Fahrtrichtung eine der Auf- und Abbewegung überlagerende Schwenkbewegung um eine erste Schwenkachse aus. Ferner ist zumeist eine mit dem Stechwerkzeug gekoppelte Rückholeinrichtung aus einer Kolben-/Zylindereinheit mit einem auf die Kolbenstange der Kolben-/Zylindereinheit einwirkendes Federelement vorgesehen, das das Stechwerkzeug nach dem Austritt aus dem Boden zurück in die Ausgangslage überführt. Ferner ist zumeist eine Dämpfungseinrichtung vorgesehen, die den Stoß des Steckwerkzeugs auf dem Maschinenrahmen beim Anschlagen gegen einen die Ausgangslage definierenden Anschlag dämpft.

Es besteht jedoch zunehmend Bedarf an Bodenbearbeitungsvorrichtungen, die mit einer schnelleren Geschwindigkeit betrieben werden können. Dies bedeutet jedoch auch, dass die Stoßbelastungen auf den Maschinenrahmen erhöht werden.

Der Erfindung liegt daher die Aufgabe zugrunde, eine Bodenbearbeitungsvorrichtung zu schaffen, bei der die Stöße auf den Maschinenrahmen reduziert sind.

Zur Lösung dieser Aufgabe dienen die Merkmale des Anspruchs 1.

Die Erfindung sieht in vorteilhafterweise vor, dass an dem äußeren freien Ende der Kolbenstange mindestens ein seitlich auskragender Flansch angeordnet ist, der mit mindestens einem an dem kolbenseitigen Ende der Zylindereinheit in Axialrichtung gegenüberliegend angeordneten korrespondierenden Flansch und mindestens einem zwischen den sich gegenüberliegenden Flanschen an dem einen oder dem anderen Flansch befestigten Dämpfungselement die Dämpfungseinrichtung bildet.

Dadurch, dass das Dämpfungselement außerhalb der Zylindereinheit angeordnet ist, kann das Dämpfungselement wesentlich größer ausgeführt werden, so dass die Stöße besser gedämpft werden.

Die Dämpfungseinrichtung kann mindestens zwei Dämpfungselemente aufweisen. Dies hat jeweils den Vorteil, dass die Stoßbelastung weiter reduzierbar ist.

Die zwei Dämpfungselemente können relativ zu der Längsachse der Kolben-/Zylindereinheit, d. h. bezogen auf die Axialrichtung, einander diametral gegenüberliegend angeordnet sein.

Die Dämpfungseinrichtung kann mindestens drei Dämpfungselemente aufweisen, wobei die Dämpfungselemente unter einem gegenseitigen Winkelabstand von 120° nebeneinander angeordnet sind.

Das mindestens eine Dämpferelement kann lösbar mit dem mindestens einen Flansch des Zylinderelements verbunden sein.

Beim Anschlag des Dämpferelements kann der mindestens eine Flansch der Kolbenstange gegen die Dämpferelemente anschlagen.

Das mindestens eine Dämpferelement kann alternativ lösbar mit dem Flansch der Kolbenstange verbunden sein.

Beim Anschlag an dem mindestens einen Dämpferelement kann der Flansch der Zylindereinheit gegen das mindestens eine Dämpferelement anschlagen.

Das mindestens eine Dämpferelement kann über Schraub- und/oder Klebeverbindungen lösbar mit dem Flansch des Zylinderelements oder der Kolbenstange verbunden sein.

In dem Zylinderelement kann eine Druckfeder angeordnet sein, die beim Verschwenken des Stechwerkzeugs im Boden zusammendrückbar ist und beim Wegfall des Bodeneingriffs eine Rückstellkraft auf den Werkzeughalter ausübt, so dass das Stechwerkzeug und der Werkzeughalter in die Ausgangslage zurückschwenkbar sind.

Das mindestens eine Dämpferelement kann aus einem Material bestehen, das Kunststoff, vorzugsweise Gummi aufweist.

Die Kolbenzylindereinheit kann bezogen auf eine horizontale Richtung, die orthogonal zu der Fahrtrichtung verläuft, mittig am Werkzeughalter angelenkt sein.

Die mindestens zwei Dämpferelemente können an einem gemeinsamen Flansch der Zylindereinheit oder der Kolbenstange befestigt sein.

Die mindestens zwei Dämpferelemente können jeweils an einem einzelnen Flansch der Zylindereinheit oder jeweils an einzelnen Flanschen der Kolbenstange befestigt sein.

Im Folgenden wird unter Bezugnahme auf die Zeichnungen Ausführungsbeispiele der Erfindung näher erläutert:

Es zeigen schematisch:
- Fig. 1: eine Bodenbearbeitungsvorrichtung,
- Fig. 2: eine schematische Darstellung des Antriebs der Bodenbearbeitungsvorrichtung,
- Fig. 3: eine Bodenbearbeitungsvorrichtung aus Fig. 2 in einer anderen Betriebsstellung,
- Fig. 4: das Federdämpferelement mit Doppeldämpfer,
- Fig. 5: ein Schnitt durch das Dämpferelement aus Fig. 4.

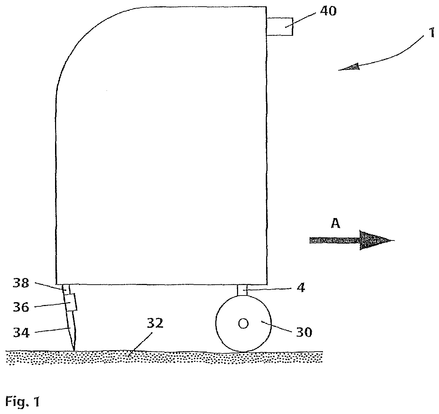

Fig. 1 zeigt die Bodenbearbeitungsvorrichtung 1. Die Bodenbearbeitungsvorrichtung weist ein Ankopplungselement 40 auf, mit dem die Bodenbearbeitungsvorrichtung 1 mit einem Zugfahrzeug gezogen werden kann. Die Bodenbearbeitungsvorrichtung 1 kann mittels Rädern 30 über eine Bodenfläche 32 gezogen werden. Die Bodenbearbeitungsvorrichtung 1 weist Stechwerkzeuge 34 auf, die in den Boden 32 einstechbar und wieder herausziebar sind.

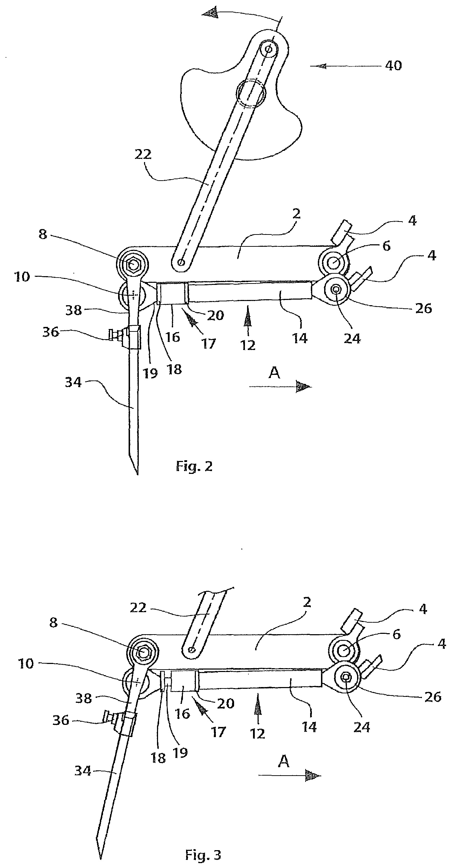

Fig. 2 zeigt schematisch den Antrieb 40 zum Auf- und Abbewegen der Stechwerkzeuge 34. Die Bodenbearbeitungsvorrichtung 1 weist ein Kurbelantrieb 40 auf, der über eine Schubstange 22 einen Schwenkarm 2 antreibt. Der Schwenkarm 2 ist an einem ersten Ende an dem Maschinenrahmen 4 um eine zweite Schwenkachse 6 schwenkbar gelagert. Durch Antrieb über die Schubstange 22 kann somit der Schwenkarm 2 um die zweite Schwenkachse 6 geschwenkt werden und dabei eine Auf- und Abbewegung ausführen. An dem dem ersten Ende der Schwenkarms gegenüberliegenden zweiten Ende des Schwenkarms 2 ist ein um eine erste Schwenkachse 8 gelenkig gelagerter Werkzeughalter 38 angeordnet, der aufgrund der Auf- und Abbewegung des Schwenkarms 2 ebenfalls eine Auf- und Abbewegung ausführt.

An dem Werkzeughalter 38 ist zumindest ein Stechwerkzeug 34, vorzugsweise eine Gruppe von Stechwerkzeugen 34, über die Befestigungseinrichtung 36 mit dem Werkzeughalter 38 verbunden.

Neben dem Schwenkarm 2 ist eine Rückholeinrichtung 12 angeordnet, die einerseits um eine Schwenkachse 24 gelenkig am Maschinenrahmen 34 gelagert ist und andererseits um eine Schwenkachse 10 am Werkzeughalter 38 gelenkig gelagert ist. Die Rückholeinrichtung 12 ist eine Kolben-/Zylindereinheit. Die Zylindereinheit 14 ist mit dem Maschinenrahmen 4 über die Schwenkachse 24 gelenkig verbunden. Die Kolbeneinheit ist eine Kolbenstange 19, die über die Schwenkachse 10 gelenkig mit dem Werkzeughalter 38 verbunden ist. In der Zylindereinheit 14 ist eine Druckfeder angeordnet, die beim teleskopartigen Herausziehen der Kolbenstange 19 aus dem Zylinderelement 14 zusammengedrückt wird und eine Rückstellkraft auf die Kolbenstange 19 ausübt.

Ferner ist eine Dämpfungseinrichtung 17 vorgesehen. An dem äußeren freien Ende der Kolbenstange 19 ist ein seitlich austragender Flansch 18 angeordnet. An der Zylindereinheit 14 ist an dem kolbenseitigen Ende der Zylindereinheit 14 in Axialrichtung gegenüberliegend zu dem auskragenden Flansch 18 der Kolbenstange 19 ein korrespondierender Flansch 20 der Zylindereinheit 14 angeordnet. Die Axialrichtung ist die Längsrichtung 42 der Kolben-/Zylindereinheit. Zwischen den beiden seitlich auskragenden Flanschen 18, 20 der Kolbenstange 19 und der Zylindereinheit 14 sind zwei Dämpfungselemente 16 angeordnet, die mit dem Flansch 18 der Kolbenstange 19 oder mit dem Flansch 20 der Zylindereinheit 14 befestigt sind. Die Dämpfungseinrichtung 17 wird durch den Flansch 18 der Kolbenstange 19, den Flansch 20 der Zylindereinheit 14 und durch die Dämpfungselemente 16 gebildet. Im dargestellten Ausführungsbeispiel sind die Dämpfungselemente 16 mit dem Flansch 20 der Zylindereinheit 14 lösbar befestigt.

In Fig. 2 ist dargestellt, dass sich das Steckwerkzeug 34 in einer Ausgangslage befindet, in der das Stechwerkzeug 34 einen vorbestimmten Einstechwinkel aufweist. Wenn sich das Stechwerkzeug 34 in der Ausgangslage befindet, liegt der Flansch 18 an den Dämpfungselementen 16 an, die somit den Anschlag bilden.

Nach dem Einstechen des Stechwerkzeugs 34 in den Boden 32 wird das Bodenbearbeitungsgerät 1 in Fahrtrichtung A bewegt. Durch die Bewegung des Bodenbearbeitungsgeräts 1 wird das Stechwerkzeug 34 zusammen mit dem Werkzeughalter 38 um die erste Schwenkachse 8 geschwenkt. In Fig. 3 ist eine verschwenkte Lage des Stechwerkzeugs 34 dargestellt. Wie aus Fig. 3 zu erkennen ist, wird beim Verschwenken des Stechwerkzeugs 34 die Kolbenstange 19 aus der Zylindereinheit 14 entgegen der Federkraft der in der Zylindereinheit 14 angeordneten Feder 40 gezogen.

Nach dem Herausziehen aus dem Boden wird aufgrund der Rückstellkraft der Feder 40 die Kolbenstange 19 wieder zurück in die Zylindereinheit 14 gezogen, so dass das Steckwerkzeug 34 wieder in die Ausgangslage zurückschwenkt. Beim Erreichen der Ausgangslage schlägt der Flansch 18 gegen die Dämpferelemente 16 an. Dadurch, dass zwei Dämpferelemente 16 vorgesehen sind, kann die Bodenbearbeitungsvorrichtung 1 sehr schnell bewegt werden. Bei einem schnellen Betrieb ist die Anschlagskraft sehr groß. Durch die zwei Dämpferelemente 16 kann die relativ hoher Anschlagskraft jedoch sehr gut gedämpft werden. Zudem besteht ein Vorteil darin, dass die Dämpferelemente außerhalb der Zylinder angeordnet sind und somit sehr leicht ausgewechselt werden können.

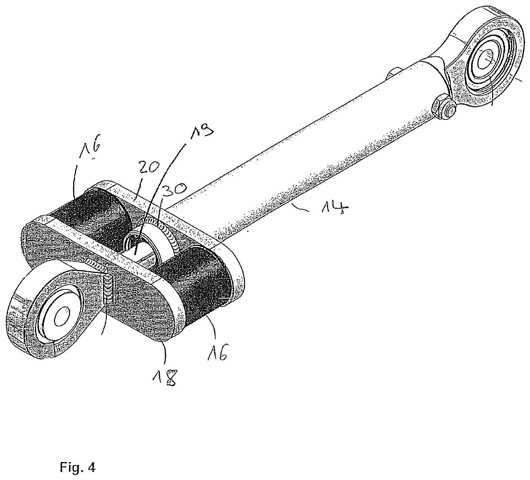

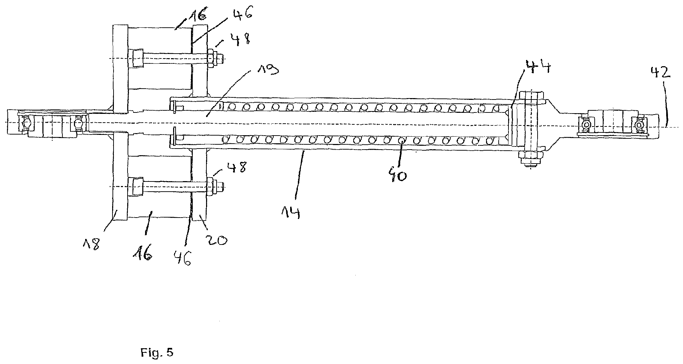

In den Fig. 4 und 5 ist die Kolben-/Zylindereinheit zusammen mit der Dämpfungseinrichtung 17 dargestellt. Die Dämpfungseinrichtung 17 weist einen Flansch 18, einen Flansch 20 und zwei Dämpferelemente 16 auf. Der seitlich auskragende Flansch 18 ist mit der Kolbenstange 19 über Schweißverbindungen 32 verbunden. Der seitlich auskragende Flansch 20 ist ebenfalls über Schweißverbindungen 30 mit der Zylindereinheit 14 verbunden. In dem dargestellten Ausführungsbeispiel sind die Dämpferelemente 16 mit dem Flansch 20 der Zylindereinheit 14 verbunden. Diese sind über eine Klebe- und/oder Schraubverbindung 46, 48 mit dem Flansch 20 verbunden. Alternativ könnten die Dämpferelemente 16 auch mit dem Flansch 18 der Kolbenstange 19 verbunden sein.

Die dargestellten Dämpferelemente 16 sind bezogen auf die Längsachse 42 der Kolben-/Zylindereinheit diametral gegenüberliegend angeordnet. Dies ist besonders vorteilhaft für die Stabilität der Dämpfungseinrichtung 17.

Die dargestellten Dämpferelemente 16 sind jeweils an einem einstückigen Flansch 20 der Zylindereinheit 14 befestigt. Auch der Flansch 18 der Kolbenstange 19 ist einstückig. Alternativ könnten der Flansch 20 und der Flansch 18 auch zweistückig ausgebildet sein.

Auch können mehr als zwei Dämpferelemente 16 vorgesehen sein, es können z. B. drei Dämpferelemente vorgesehen sein. In diesem Fall ist es besonders vorteilhaft, wenn die Dämpferelemente einen gegenseitigen Winkelabstand von 120° aufweisen. Diese Dämpferelemente können ebenfalls jeweils an einem einstückigen Flansch, der mit der Zylindereinheit 14 oder der Kolbenstange 19 verbunden ist, verbunden sein oder es könnte für jedes Dämpferelement 16 ein einzelner Flansch vorgesehen werden. Alternativ können auch mehr als drei Dämpferelemente vorgesehen sein.

Als weitere Alternative könnte auch nur ein einzelnes Dämpferelement vorgesehen sein, das jedoch so groß ist, das ein erster Teil und ein zweiter Teil des Dämpferelementes bezogen auf die Längsachse 42 der Kolben-/Zylindereinheit diametral gegenüberliegend angeordnet sind. In der Mitte könnte das Dämpferelement für die Kolbenstange 19 eine Aussparung aufweisen.

In Fig. 5 ist die in der Zylindereinheit 14 angeordnete Druckfeder 40 dargestellt. Die Druckfeder wird beim Herausziehen der Kolbenstange 19 aus der Zylindereinheit 14 durch das Endelement 44 der Kolbenstange zusammengedrückt. Dadurch wird auf das Stechwerkzeug 34 über die Kolbenstange 19 eine Rückstellkraft ausgeübt. Alternativ könnte die Feder der Zylindereinheit 14 auch eine Zugfeder sein, die eine Rückstellkraft auf das Stechwerkzeug 34 ausübt.

## Patentansprüche

1. Bodenbearbeitungsvorrichtung (1) zum Erzeugen von Hohlräumen in einem Boden (32), mit
- einem in Fahrtrichtung bewegbaren Maschinenrahmen (4),
- mindestens einem in dem Maschinenrahmen (4) gelagerten Antrieb (20), der mindestens ein schwenkbar gelagertes Stechwerkzeug (34) im wesentlichen vertikal auf- und abbewegt,
- wobei sich das Stechwerkzeug (34) vor dem Einstechen in den Boden in einer Ausgangslage unter einem vorgegebenen Einstechwinkel befindet und im Boden (32) aufgrund der Bewegung des Maschinenrahmens (4) in Fahrtrichtung eine die Auf- und Abbewegung überlagernde Schwenkbewegung um eine erste Schwenkachse (8) ausführt,
- einer mit dem Stechwerkzeug (34) gekoppelten Rückholeinrichtung (12) aus einer Kolben-/Zylindereinheit mit einem auf die Kolbenstange (19) der Kolben-/Zylindereinheit einwirkendes Federelement (40), das das Stechwerkzeug nach dem Austritt aus dem Boden (32) zurück in die Ausgangslage überführt, und
- einer Dämpfungseinrichtung (17), die den Stoß des Stechwerkzeuges (34) auf den Maschinenrahmen (4) beim Anschlagen gegen einen die Ausgangslage definierenden Anschlag dämpft,
**dadurch gekennzeichnet, dass**
an dem äußeren freien Ende der Kolbenstange (19) mindestens ein seitlich auskragender Flansch (18) angeordnet ist, der mit mindestens einem an dem kolbenseitigen Ende der Zylindereinheit (14) in Axialrichtung gegenüberliegend angeordneten korrespondierenden Flansch (20) und mindestens einem zwischen den sich gegenüberliegenden Flanschen (18, 20) an dem einen oder dem anderen Flansch (18, 20) befestigten Dämpfungselement (16) die Dämpfungseinrichtung (17) bildet.

2. Bodenbearbeitungsvorrichtung (1) nach Anspruch 1, **dadurch gekennzeichnet, dass** die Dämpfungseinrichtung (17) mindestens zwei Dämpfungselemente (16) aufweist.

3. Bodenbearbeitungsvorrichtung (1) nach Anspruch 1 oder 2, **dadurch gekennzeichnet, dass** die zwei Dämpfungselemente (16) relativ zu der Längsachse der Kolben-/Zylindereinheit einander diametral gegenüberliegend angeordnet sind.

4. Bodenbearbeitungsvorrichtung (1) nach einem der Ansprüche 1 bis 3, **dadurch gekennzeichnet, dass** die Dämpfungseinrichtung (17) mindestens drei Dämpfungselemente (16) aufweist, wobei die Dämpfungselemente (16) unter einem gegenseitigen Winkelabstand von 120 Grad nebeneinander angeordnet sind.

5. Bodenbearbeitungsvorrichtung (1) nach einem der Ansprüche 1 bis 4, **dadurch gekennzeichnet, dass** das mindestens eine Dämpferelement (16) lösbar mit dem mindestens einen Flansch (20) des Zylinderelement (14) verbunden ist.

6. Bodenbearbeitungsvorrichtung (1) nach Anspruch 5, **dadurch gekennzeichnet, dass** beim Anschlag des mindestens einen Dämpferelements (16) der mindestens eine Flansch (18) der Kolbenstange (19) gegen das mindestens eine Dämpferelement (16) anschlägt.

7. Bodenbearbeitungsvorrichtung (1) nach Anspruch 1 oder 2, **dadurch gekennzeichnet, dass** das mindestens eine Dämpferelement (16) lösbar mit dem Flansch (18) der Kolbenstange (19) verbunden ist.

8. Bodenbearbeitungsvorrichtung (1) nach Anspruch 7, **dadurch gekennzeichnet, dass** beim Anschlag an dem mindestens einen Dämpferelement (16) der Flansch (20) der Zylindereinheit (14) gegen das mindestens eine Dämpferelement (16) anschlägt.

9. Bodenbearbeitungsvorrichtung (1) nach einem der Ansprüche 1 bis 8, **dadurch gekennzeichnet, dass** das mindestens eine Dämpferelement (16) über Schraub- und/oder Klebeverbindungen (46, 48) lösbar mit dem Flansch (18, 20) der Zylindereinheit (14) oder der Kolbenstange (19) verbunden ist.

10. Bodenbearbeitungsvorrichtung (1) nach einem der Ansprüche 1 bis 9, **dadurch gekennzeichnet, dass** in der Zylindereinheit (14) eine Druckfeder (40) angeordnet ist, die beim Verschwenken des Stechwerkzeugs (34) im Boden (32) zusammen drückbar ist und bei Wegfall des Bodeneingriffs eine Rückstellkraft auf den Werkzeughalter (38) ausübt, so dass das Stechwerkzeug (34) und der Werkzeughalter (38) in die Ausgangslage zurückschwenkbar sind.

11. Bodenbearbeitungsvorrichtung (1) nach einem der Ansprüche 1 bis 10, **dadurch gekennzeichnet, dass** das mindestens eine Dämpferelemente (16) aus einem Material bestehet, das Kunststoff, vorzugsweise Gummi aufweist.

12. Bodenbearbeitungsvorrichtung (1) nach einem der Ansprüche 1 bis 11, **dadurch gekennzeichnet, dass** die Kolben-/Zylindereinheit bezogen auf eine horizontale Richtung, die orthogonal zu der Fahrtrichtung verläuft, mittig am Werkzeughalter (38) angelenkt ist.

13. Bodenbearbeitungsvorrichtung (1) nach einem der Ansprüche 1 bis 12, **dadurch gekennzeichnet, dass** die mindestens zwei Dämpferelemente (16) an einem gemeinsamen Flansch (18, 20) der Zylindereinheit (14) oder der Kolbenstange (19) befestigt sind.

14. Bodenbearbeitungsvorrichtung (1) nach einem der Ansprüche 1 bis 12, **dadurch gekennzeichnet, dass** die mindestens zwei Dämpferelemente (16) an jeweils einem einzelnen Flansch der Zylindereinheit (14) oder der Kolbenstange (19) befestigt sind.

## Claims

1. A soil working device (1) for creating cavities in soil (32), comprising
- a machine frame (4) that can move in the direction of travel,
- at least one drive (20) that is mounted in the machine frame (4) and moves at least one pivotally mounted piercing tool (34) up and down in a substantially vertical direction,
- wherein, before piercing into the soil, the piercing tool (34) is in a home position at a predefined piercing angle, and, in the soil (32), performs a pivoting movement about a first pivot axis (8) as a result of the machine frame (4) moving in the direction of travel, said pivoting movement being superimposed on the up-and-down movement,
- a restoring means (12) which is coupled to the piercing tool (34) and consists of a piston/cylinder unit with a spring element (40) that acts on the piston/cylinder unit (19) and brings the piercing tool back into the home position once the latter has emerged from the soil (32), and
- a damping means (17) which dampens the shock of the piercing tool (34) against the machine frame (4) when the piercing tool hits a stop defining the home position,
**characterized in that**
at least one laterally projecting flange (18) is arranged at the outer free end of the piston rod (19), said flange (18) forming the damping means (17) together with at least one corresponding flange (20) located at the axially opposite, piston-side end of the cylinder unit (14) and at least one damping element (16) that is located between the two opposite flanges (18, 20) and is secured to one or the other flange (18, 20).

2. The soil working device (1) of claim 1, **characterized in that** the damping means (17) comprises at least two damping elements (16).

3. The soil working device (1) of claim 1 or 2, **characterized in that** the two damping elements (16) are arranged diametrically opposite each other with respect to the longitudinal axis of the piston/cylinder unit.

4. The soil working device (1) of one of claims 1 to 3, **characterized in that** the damping means (17) comprises at least three damping elements (16), the damping elements (16) being arranged side by side at a mutual angular distance of 120°.

5. The soil working device (1) of one of claims 1 to 4, **characterized in that** the at least one damping element (16) is detachably connected with the at least one flange (20) of the cylinder element (14).

6. The soil working device (1) of claim 5, **characterized in that**, upon an impact of the at least one damping element (16), the at least one flange (18) of the piston rod (19) hits the at least one damping element (16).

7. The soil working device (1) of one of claims 1 or 2, **characterized in that** the at least one damping element (16) is detachably connected with the flange (18) of the piston rod (19).

8. The soil working device (1) of claim 7, **characterized in that**, when hitting the at least one damping element (16), the flange (20) of the cylinder unit (14) hits the at least one damping element (16).

9. The soil working device (1) of one of claims 1 to 8, **characterized in that** the at least one damping element (16) is detachably connected with the flange (18, 20) of the cylinder unit (14) or the piston rod (19) via threaded and/or an adhesive connections (46, 48).

10. The soil working device (1) of one of claims 1 to 9, **characterized in that** a compression spring (40) is arranged in the cylinder unit (14), which can be compressed as the piercing tool (34) pivots in the soil (32) and which exerts a restoring force on the tool holder (38) when the tool no longer engages the soil, so that the piercing tool (34) and the tool holder (38) can be pivoted back into the home position.

11. The soil working device (1) of one of claims 1 to 10, **characterized in that** the at least one damping element (16) is made of a material that includes plastic material, preferably rubber.

12. The soil working device (1) of one of claims 1 to 11, **characterized in that** piston/cylinder unit is hinged to the tool holder (38) at a central position with respect to a horizontal direction extending orthogonally to the traveling direction.

13. The soil working device (1) of one of claims 1 to 12, **characterized in that** the at least two damping elements (16) are fastened to a common flange (18, 20) of the cylinder unit (14) or the piston rod (19).

14. The soil working device (1) of one of claims 1 to 12, **characterized in that** the at least two damping elements (16) are respectively fastened to a single flange of the cylinder unit (14) or the piston rod (19).

## Revendications

1. Dispositif de travail du sol (1) destiné à la production de cavités dans un sol (32), avec :
- un bâti de machine (4) pouvant se déplacer dans le sens de la marche ;
- au moins un entraînement (20) qui est mis en place dans le bâti de machine (4), lequel entraînement (20) permet de lever et d'abaisser, pour l'essentiel à la verticale, au moins un outil de soyage (34) qui est mis en place de manière à pouvoir pivoter ;
- selon lequel l'outil de soyage (34) se trouve, avant la pénétration dans le sol, dans une position de départ avec un angle de pénétration prédéfini et exécute dans le sol (32), sur la base du mouvement du bâti de machine (4), un mouvement de pivotement autour d'un premier axe de pivotement (8) dans le sens de la marche, lequel mouvement de pivotement se superpose au mouvement vers le haut et vers le bas ; et
- un mécanisme de rappel (12) couplé à l'outil de soyage (34), lequel mécanisme de rappel (12) est constitué d'une unité à piston et à cylindre avec un élément de ressort (40) qui agit sur la tige de piston (19) de l'unité à piston et à cylindre et qui remet l'outil de soyage dans la position de départ après sa sortie du sol (32) ; et
- un mécanisme d'amortissement (17) qui amortit le choc de l'outil de soyage (34) sur le bâti de machine (4) quand il vient heurter une butée définissant la position de départ,
**caractérisé en ce que**
au moins une bride (18), faisant saillie de manière latérale, est disposée au niveau de la libre extrémité extérieure de la tige de piston (19), laquelle bride (18) forme le mécanisme d'amortissement (17) avec au moins une bride (20) mise en corrélation et disposée à l'opposé de l'unité de cylindre (14), dans le sens axial, au niveau de l'extrémité qui se trouve du côté du piston, ainsi qu'avec au moins un élément d'amortissement (16) lequel est fixé entre les brides (18, 20), sur l'une ou l'autre bride (18, 20), lesquelles sont positionnées de manière opposée l'une par rapport à l'autre.

2. Dispositif de travail du sol (1) selon la revendication 1, **caractérisé en ce que** le mécanisme d'amortissement (17) présente au moins deux éléments d'amortissement (16).

3. Dispositif de travail du sol (1) selon la revendication 1 ou 2, **caractérisé en ce que** les deux éléments d'amortissement (16) sont disposés diamétralement à l'opposé l'un de l'autre, par rapport à l'axe longitudinal de l'unité à piston et à cylindre.

4. Dispositif de travail du sol (1) selon l'une des revendications 1 à 3, **caractérisé en ce que** le mécanisme d'amortissement (17) présente au moins trois éléments d'amortissement (16), selon lequel les éléments d'amortissement (16) sont disposés les uns à côté des autres, à une distance angulaire réciproque de 120 degrés.

5. Dispositif de travail du sol (1) selon l'une des revendications 1 à 4, **caractérisé en ce que** l'au moins un élément d'amortissement (16) est raccordé de manière amovible à l'au moins une bride (20) de l'élément de cylindre (14).

6. Dispositif de travail du sol (1) selon la revendication 5, **caractérisé en ce que**, lors de la butée de l'au moins un élément d'amortissement (16), l'au moins une bride (18) de la tige de piston (19) vient buter contre l'au moins un élément d'amortissement (16).

7. Dispositif de travail du sol (1) selon la revendication 1 ou 2, **caractérisé en ce que** l'au moins un élément d'amortissement (16) est raccordé de manière amovible à la bride (18) de la tige de piston (19).

8. Dispositif de travail du sol (1) selon la revendication 7, **caractérisé en ce que**, lors de la butée au niveau de l'au moins un élément d'amortissement (16), la bride (20) de l'unité de cylindre (14) vient buter contre l'au moins un élément d'amortissement (16).

9. Dispositif de travail du sol (1) selon l'une des revendications 1 à 8, **caractérisé en ce que** l'au moins un élément d'amortissement (16) est raccordé de manière amovible à la bride (18, 20) de l'unité de cylindre (14) ou de la tige de piston (19), par l'intermédiaire de raccords à vis et/ou de joints adhésifs (46, 48).

10. Dispositif de travail du sol (1) selon l'une des revendications 1 à 9, **caractérisé en ce qu'**un ressort de compression (40) est disposé dans l'unité de cylindre (14), lequel ressort de compression (40) est compressible lors du pivotement de l'outil de soyage (34) dans le sol (32) et exerce une force de rappel sur le porte-outil (38) à l'arrêt des travaux dans le sol, de telle sorte que l'outil de soyage (34) et le porte-outil (38) peuvent être ramenés par pivotement dans la position de départ.

11. Dispositif de travail du sol (1) selon l'une des revendications 1 à 10, **caractérisé en ce que** l'au moins un élément d'amortissement (16) est constitué d'un matériau qui présente du plastique, de préférence du caoutchouc.

12. Dispositif de travail du sol (1) selon l'une des revendications 1 à 11, **caractérisé en ce que** l'unité à piston et à cylindre est articulée au centre du porte-outil (38), par rapport à une direction horizontale qui court de manière orthogonale par rapport au sens de la marche.

13. Dispositif de travail du sol (1) selon l'une des revendications 1 à 12, **caractérisé en ce que** les au moins deux éléments d'amortissement (16) sont fixés sur une bride (18, 20) commune de l'unité de cylindre (14) ou de la tige de piston (19).

14. Dispositif de travail du sol (1) selon l'une des revendications 1 à 12, **caractérisé en ce que** les au moins deux éléments d'amortissement (16) sont fixés sur respectivement une bride individuelle de l'unité de cylindre (14) ou de la tige de piston (19).
